Europäisches Patentamt

European Patent Office

Office européen des brevets

(19)

(11) Veröffentlichungsnummer: **0 320 668**
**A2**

# EUROPÄISCHE PATENTANMELDUNG

(12)

(21) Anmeldenummer: 88119466.6

(22) Anmeldetag: 23.11.88

(51) Int. Cl.⁴: **B31B 1/22**

(30) Priorität: 17.12.87 DE 3742917

(43) Veröffentlichungstag der Anmeldung:
21.06.89 Patentblatt 89/25

(84) Benannte Vertragsstaaten:
AT BE CH DE ES FR GB GR IT LI NL SE

(71) Anmelder: **Louda, Günther**
**Dr.-Kurt-Huber-Strasse 10**
**D-8022 Grünwald(DE)**

(72) Erfinder: **Louda, Günther**
**Dr.-Kurt-Huber-Strasse 10**
**D-8022 Grünwald(DE)**

(74) Vertreter: **Lamprecht, Helmut, Dipl.-Ing.**
**Corneliusstrasse 42**
**D-8000 München 5(DE)**

(54) **Verfahren zur Erzeugung einer Falzkante bei einem blattförmigen Kunststoffmaterial.**

(57) Zur Erzeugung einer Falzkante bei einem blattförmigen, ganz oder teilweise aus Kunststoff bestehenden Material wird ein gegen die Oberfläche des
Materials gerichteter Laserstrahl in Richtung der vorgesehenen Falzkante über diese Oberfläche gerführt.

EP 0 320 668 A2

**Verfahren zur Erzeugung einer Falzkante bei einem blattförmigen Kunststoffmaterial.**

Blatt- oder folienartiges Material aus Kunststoff ode zumindest mit einer Lage aus Kunststoff, wie z.B. mit durchsichtigem Kunststoff zur Verbesserung der Fälschungssicherheit laminierte Dokumentenseiten, etwa von Reisepässen, lassen sich im Gegensatz zu entsprechenden Seiten aus Papier oder papierartigem Material nur verhältnismäßig schwer umblättern, weil das Material zwar flexibel ist, aber nicht längs einer vorgesehenen Falzkante weiderholt und mühelos umschlagbar ist.

Selbst verhältnismäßig aufwendige Maßnahmen, wie beispielsweise bei der Fertigung eingearbeitete Kerben oder Perforationen vermögen diesen Nachteil nicht vollständig zu beseitigen. Sofern bandförmiges Kunststoffmaterial benutzt wird, um bedruckte Datenträger zu laminieren, steht erst nach dem Laminiervorgang der genaue Ort der Falzkante fest, da sich dieser nach dem Abdruck richtet. Es ist deshalb schwierig, die Falzkante bereits bei der Produktion des Kunststoffhüllmaterials vorzubereiten.

Der Einsatz beheizter Prägebacken, um nach dem Laminieren Falzkerben in die Kunststoffoberfläche einzudrücken, ist bei mit hoher Geschwindigkeit arbeitenden Anlagen, beispielsweise zur Ausweisherstellung, ungeeignet, weil durch derartige Prägebacken eine verhältnismäßig große Energiemenge auf das bearbeitete Material übertragen wird, so daß nach dem Prägevorgang eine Kühlung bei noch geschlossenen Backen und damit ein verhältnismäßig großer, den Produktionsablauf verzögernder Zeitaufwand erforderlich würde.

Der Erfindung liegt die Aufgabe zugrunde, ein einfaches Verfahren zu schaffen, mit dem jederzeit ein blattförmiges, ganz oder teilweise aus Kunststoff bestehendes Material an jeder beliebigen Stelle mit einer Falzkante versehen werden kann, die es ermöglicht, dieses Material im Bereich der Falzkante ebenso einfach umzuschlagen, wie vergleichbare Blätter aus Papier oder Papierähnlichem Material. Dabei soll das Verfahren geeignet sein, mit möglichst geringem Zeitaufwand eine exakt positionierte Falzkante zu erzeugen.

Zur Lösung dieser Aufgabe besteht die Erfindung darin, daß ein gegen die Oberfläche des Materials gerichteter Laserstrahl in Richtung der vorgesehenen Falzkante über diese Oberfläche bewegt wird.

Eine besonders vorteilhafte Wirkung erzielt man, wenn der Laserstrahl in mehreren, in dem Bereich der vorgesehenen Falzkante eng benachbarten Zeilen über die Oberfläche geführt wird. Vorzugsweise wird der Laserstrahl im Bereich der vorgesehenen Falzkante über beide Oberflächen des Materials geführt.

Untersuchungen haben ergeben, daß durch die kurzzeitige Einwirkung des Laserstrahls in dem von ihm bestrichenen Bereich eine mehrfache Wirkung ausgeht. Neben einem Aufbrechen der polymeren Molekularstruktur ändert sich die Orientierung der Moleküle und es findet ein Materialabtrag durch Verdampfen und Abfließen des Materials aus dem vom Laserstrahl bestrichenen Bereich nach dessen Rändern statt. Die dadurch bewirkte Schwächung des Kunststoffquerschnitts im Bereich der vorgesehenen Flzkante wird noch dadurch verstärkt, daß sich im Kunststoff in dem vom Laserstrahl bestrichenen Bereich Gasblasen einlagern.

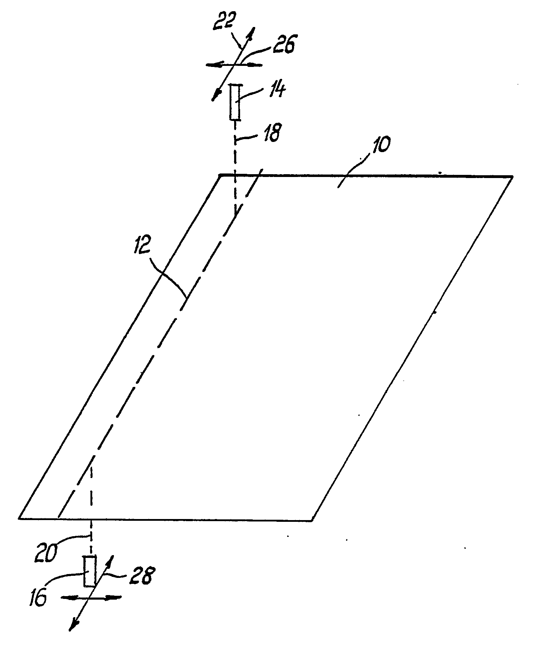

Zur Erläuterung des Verfahrens ist in der Zeichnung schematisch eine in ein Dokument einzubindende Seite dargestellt, der in an sich bekannter und deshalb nicht näher dargestellter Weise aus einem bedruckten Datenträger aus Papier oder papierähnlichem Material besteht, das beiderseits mit einer Deckschicht aus durchsichtigem Kunststoff laminiert ist.

Dieses blattförmige Material wird mit 10, der Ort der gewünschten Falzkante mit 12 bezeichnet. Schematisch dargestellte Einrichtungen 14 und 16 zur Erzeugung eines Laserstrahls 18 bzw. 20 sind derart angeordnet, daß der Laserstrahl 18 bzw. 20 etwa senkrecht auf die Oberfläche des blattförmigen Materials 10 auftrifft. Die Einrichtungen 14 und 16 können in der durch Pfeile 22 bzw. 24 gekennzeichneten Richtung längs der Falzkante 12 bewegt werden. Außerdem ist eine Möglichkeit vorgesehen, diese Vorrichtungen in sehr kleinen Schritten quer zur Richtung der Falzkante 12 zu verstellen, wie durch Pfeile 26 bzw. 28 angedeutet ist. Dadurch besteht die Möglichkeit, den Laserstrahl 18 bzw. 20 in mehreren eng benachbarten Zeilen im Bereich der Falzkante 12 über das Material 10 zu führen und dadurch die Wirkung, insbesondere bei dickerem Material, zu verbessern.

**Ansprüche**

1. Verfahren zur Erzeugung einer Falzkante bei einem blattförmigen, ganz oder teilweise aus Kunststoff bestehenden Material, *dadurch gekennzeichnet*, daß ein gegen die Oberfläche des Materials gerichteter Laserstrahl in Richtung der vorgesehenen Falzkante über diese Oberfläche bewegt wird.

2. Verfahren nach Anspruch 1, *dadurch gekennzeichnet*, daß der Laserstrahl in mehreren, im Bereich der vorgesehenen Falzkante eng benachbarten Zeilen über die Oberfläche geführt wird.

3. Verfahren nach einem der Ansprüche 1 oder 2, *dadurch gekennzeichnet*, daß im Bereich der vorgesehenen Falzkante über beide Oberflächen des Materials ein Laserstrahl geführt wird.